# EUROPÄISCHE PATENTANMELDUNG

(11) **EP 4 113 102 A1**
(43) Veröffentlichungstag der Anmeldung: **04.01.2023**
(21) Anmeldenummer: 22181772.9
(22) Anmeldetag: 29.06.2022
(51) Int. Cl.: G01N 21/31, G01N 21/55, G01N 21/47, G01J 3/00

(54) **VERFAHREN ZUR OPTISCHEN ÜBERWACHUNG UND/ODER BESTIMMUNG VON EIGENSCHAFTEN AN PROBEN**

(30) Priorität: 30.06.2021 DE 102021206879
(71) Anmelder: Fraunhofer-Gesellschaft zur Förderung der angewandten Forschung e.V., 80686 München (DE)
(72) Erfinder: Hartmann, Peter, 01277 Dresden (DE); Baselt, Tobias, 01277 Dresden (DE); Grählert, Wulf, 01277 Dresden (DE); Throl, Oliver, 01277 Dresden (DE); Wollmann, Philipp, 01277 Dresden (DE)
(74) Vertreter: Pfenning, Meinig & Partner mbB

(57) **Zusammenfassung**

Bei dem Verfahren zur optischen Überwachung und/oder Bestimmung von Eigenschaften an Proben wird von mehreren Strahlungsquellen (1) monochromatische elektromagnetische Strahlung mit vorgegebener Wellenlänge λᵢ sequentiell von einer elektronischen Auswerteinheit beeinflusst auf eine Probe (2) gerichtet. Die jeweilige für die Wellenlänge λᵢ spezifische Intensität der von der Probe gestreuten und/oder reflektierten elektromagnetischen Strahlung wird mit mindestens einem Detektor (3) erfasst und für eine spektralaufgelöste Auswertung der elektronischen Auswerteeinheit zugeführt, um damit eine Überwachung und/oder Bestimmung von Eigenschaften der jeweiligen Probe (2) durchzuführen.

## Beschreibung

Die Erfindung betrifft ein Verfahren zur optischen Überwachung und/oder Bestimmung von Eigenschaften an Proben. Dabei können verschiedene Oberflächeneigenschaften von Proben, die Eigenschaften von Beschichtungen, die auf einer Oberfläche einer Probe ausgebildet sind, Qualitätsparameter von Proben oder Probenzuordnungen/Probenklassen überwacht bzw. bestimmt werden.

Die Erfindung kann bei der Qualitäts- und Prozesskontrolle industrieller Erzeugnisse eingesetzt werden, die aus oder mit einem der folgenden Materialien hergestellt werden. Dies können Gläser, Kunststoffe, Holz, keramische, halbleitende und metallische Materialien sein. Dabei können Oberflächen, Beschichtungen und Lacke, strukturierte Oberflächen bzw. strukturierte Bauteile/Produkte, große Oberflächen (bis zu einigen Metern) mit relevanten Merkmalen im mm-µm Bereich, Folien oder auch komplexe technische Bauteile überprüft werden. Es ist auch ein Einsatz bei einer Reinheits- /Sauberkeitsprüfung.

Anwendungsgebiete liegen beispielsweise im Automotive/Automobilbau, Flugzeugbau, Apparate- und Gerätebau, Halbleiterindustrie, Beschichtungsindustrie, Kunstanalytik, Sicherheitstechnik, Geldscheinprüfung dem Hautscreening und der Herstellung optischer Gläser.

Die hyperspektrale Bildgebung wird bislang auf Basis einer breitbandigen Beleuchtung und einer sich anschließenden, nach der Wechselwirkung des Lichtes mit einer Probe, spektralen Zerlegung der elektromagnetischen Strahlung realisiert. Für die Zerlegung der elektromagnetischen Strahlung ist ein Spektroskop, Interferometer oder eine Filtermatrix (z. B. Fabry-Perot-Filter) erforderlich. Zusätzlich, ist je nach Art des Spektroskops, eine zusätzliche Ausrüstung mit einer Bewegungsachse notwendig. Die erforderlichen technischen Anordnungen und Ausrüstungen sind in den Kameras integriert, führen somit zu zusätzlichem Hardware- und Kalibrieraufwand, reduzieren die spektrale Bildqualität (dispersionsbedingt frequenzabhängige Fokusebenen, Lichtdurchsatz, Signal-Rauchverhältnis) und/oder verlangsamen die spektrale Bilderfassung.

So ist beispielsweise das so genannte pushbroom-Verfahren bekannt, das i. d. R. für die hyperspektrale Datenaufnahme genutzt wird. Die Erfassung des von einer breitbandigen Quelle emittierte und mit der Probe wechselgewirkte Licht erfolgt mit hoher spektraler Auflösung, wobei das Licht einer Zeile über das Spektroskop spektral aufgespalten und auf einen 2D-Detektor abgebildet wird. Dabei kann nur eine Zeile des untersuchten Objekts abgebildet werden. Ein hyper-spektrales Bild kann erst durch eine Relativbewegung von Kamera und untersuchtem Objekts erfasst werden.

Das so genannte ,snapshot'-Verfahren wird i. d. R. für eine multispektrale Datenaufnahme genutzt. Die Erfassung des von einer breitbandigen Quelle emittierten und mit der Probe wechselgewirkte Licht erfolgt mit geringer spektraler Auflösung auf einem 2D-Flächendetektor. Dieser besitzt sub-Strukturen (Sub-Pixel), die die spektrale Unterscheidung ermöglichen. Die sub-Strukturen werden z. B. durch aufgeprägte Fabry-Perot-Filter realisiert und sind schwierig zu fertigen, zu kalibrieren und die Detektoren sind in der spektralen und räumlichen Auflösung begrenzt (üblich 4x4 oder 5x5 Wellenlängen); weiterhin gibt es deutliche Fertigungsunterschiede einzelner Filter.

Das so genannten ,time-domain'-Verfahren kann für eine hohe spektrale Auflösung genutzt werden. Die Erfassung der Bilddaten erfolgt mit hoher spektraler Auflösung. Dabei wird aus der empfangenen elektromagnetischen Strahlung eine einzelne Wellenlänge separiert und das Bild bei dieser einzelnen Wellenlänge auf einen 2D-Detektor abgebildet. Nachteilig dabei ist der hohe zeitliche Aufwand zur Datenerfassung. Bewegte Szenen können so nicht erfasst werden.

Das so genannte ,mapping'-Verfahren kann für höchste spektrale Auflösung genutzt werden. Die Erfassung der Bilddaten erfolgt dabei Punkt-für-Punkt über ein Spektroskop bzw. Spektrometer. Diese Methode erfordert den höchsten zeitlichen Aufwand und bewegte Szenen können nicht berücksichtigt werden.

Es ist daher Aufgabe der Erfindung, Möglichkeiten anzugeben, mit denen Proben überwacht und/oder Eigenschaften ab Proben in kurzer Zeit, ohne direkte Beeinflussung einer Probe, mit geringem Aufwand und flexibel, insbesondere was die Art von Proben oder deren Eigenschaften betrifft, bestimmt werden können.

Erfindungsgemäß wird diese Aufgabe mit einem Verfahren, das die Merkmale des Anspruchs 1 aufweist, gelöst. Vorteilhafte Ausgestaltungen und Weiterbildungen der Erfindung können mit in abhängigen Ansprüchen bezeichneten Merkmalen realisiert werden.

Bei dem Verfahren wird von mehreren Strahlungsquellen monochromatische elektromagnetische Strahlung mit vorgegebener Wellenlänge λᵢ sequentiell von einer elektronischen Auswerteinheit beeinflusst auf eine Probe gerichtet. Dabei wird die jeweilige für die Wellenlänge λᵢ spezifische Intensität der von der Probe gestreuten und/oder reflektierten elektromagnetischen Strahlung mit mindestens einem Detektor erfasst und für eine spektralaufgelöste Auswertung der elektronischen Auswerteeinheit zugeführt, um damit eine Überwachung und/oder Bestimmung von Eigenschaften der jeweiligen Probe durchzuführen.

Mit anderen Worten ausgedrückt, wird monochromatische Strahlung nacheinander innerhalb eines Zeitintervalls von einer Strahlungsquelle emittiert, so dass diese monochromatische elektromagnetische Strahlung mit der Wellenlänge λᵢ auf eine Probe auftrifft. Die Intensität der von der Probe gestreuten oder reflektierten elektromagnetischen Strahlung wird innerhalb desselben Zeitintervalls mit dem mindestens einen Detektor zeitsynchron detektiert und einer elektronischen Auswerte- und Steuereinheit zugeführt, in der erfassten Intensitätsmesswerte gespeichert und mit anderen Messwerten spektral ausgewertet werden. In nachfolgenden Zeitintervallen wird dieser Vorgang wiederholt, wobei dabei in einem Zeitintervall jeweils eine andere Strahlungsquelle genutzt wird, mit der monochromatische Strahlung mit einer anderen Wellenlänge λᵢ₊ₓ emittiert und dazu die jeweilige Intensität der in dem entsprechenden Zeitintervall mit dem mindestens einen Detektor zeitsynchron erfasst und dann der Auswerte- und Steuereinheit zugeführt wird. Mit der Auswerte- und Steuereinheit kann auch die Ansteuerung der einzelnen Strahlungsquellen erfolgen.

Bei der Aktivierung der einzelnen Strahlungsquellen und der entsprechenden Detektion ist lediglich die Kenntnis der im entsprechenden Zeitintervall genutzten Wellenlänge λᵢ erforderlich, um die entsprechend erfassten Intensitätsmesswerte der jeweiligen Wellenlänge λᵢ zuordnen zu können.

Es kann elektromagnetische Strahlung mit Wellenlängen λᵢ in einem Wellenlängenbereich 250 nm bis 2500 nm, insbesondere 250 nm bis 1100 nm bzw. 1000 nm bis 2500 nm eingesetzt werden. Dabei können mindestens drei, bevorzugt mindestens zehn unterschiedliche Wellenlängen λᵢ mit entsprechenden Strahlungsquellen emittiert werden.

Die elektromagnetische Strahlung, die von den Strahlungsquellen emittiert wird, kann über Lichtleitfasern in Richtung Probe geleitet werden. Dabei kann die von den einzelnen Strahlungsquellen emittierte monochromatische elektromagnetische Strahlung zuerst über jeweils eine Lichtleitfaser, die dann mit einem Koppelelement in eine einzige Lichtleitfaser mündet, in Richtung Probe gerichtet werden. In der einzigen Lichtleitfaser erfolgt die Übertragung der elektromagnetischen Strahlung mit den unterschiedlichen Wellenlängen λᵢ sequentiell nacheinander.

Die elektromagnetische Strahlung, die von den Strahlungsquellen sequentiell emittiert wird, kann durch ein die elektromagnetische Strahlung homogenisierendes Element in Richtung Probe gerichtet werden.

Es können Strahlungsquellen und/oder ein die elektromagnetische Strahlung homogenisierendes Element kann eingesetzt werden, die/die mit einer thermischen Überwachung und einer Vorrichtung die für ein Wärmemanagement ausgebildet ist, ausgestattet sind.

Elektromagnetische Strahlung kann von mehreren Strahlungsquellen emittiert und mehreren Detektoren detektiert werden, wobei die Strahlungsquellen und/oder Detektoren in einer Reihen- oder Reihen- und Spaltenanordnung angeordnet sein können.

Von den einzelnen Strahlungsquellen sollte monochromatische elektromagnetische Strahlung mit einer Halbwertsbreite von ≤ 50 nm emittiert werden.

Die Probe und der/die Detektor(en)können bevorzugt relativ zueinander während der Emission und Detektion zueinander bewegt werden. Dadurch können größere Bereiche oder mehrere Bereiche einer Probe, die unterschiedlich und in Abstanden zueinander angeordnet sind, berücksichtigt werden.

Das Verfahren macht die Nutzung eines Spektroskops, Interferometers, einer Filtermatrix und (optional) zusätzlicher Bewegungseinheiten für die (hyper- )spektrale Bilderfassung obsolet. Die Fähigkeit der spektralen Zerlegung elektromagnetischer Strahlung ist von deren Detektion entkoppelt. Daraus leitet sich die Realisierung einer flächigen orts- und spektral auflösenden Bilderfassung ab. Darüber hinaus eröffnen Anordnung und Verfahren die Möglichkeit einer lateral hochauflösenden und gleichzeitig spektral auflösenden Bilderfassung mit einem beliebig großen Blickfeld (FOV). Zusätzlich ist es möglich, frequenzabhängig immer die korrekte Fokuseben einzustellen.

Die spektrale Zerlegung der emittierten elektromagnetischen Strahlung erfolgt nicht nach der Wechselwirkung der elektromagnetischen Strahlung mit der Probe durch Interferometer oder Spektroskop. Sie kann durch eine zeitmultiplex-multispektrale Beleuchtung realisiert werden.

Auf Basis mehrerer Strahlungsquellen, die jeweils annähernd monochromatische elektromagnetische Strahlung mit einer Wellenlänge innerhalb eines vorgegebenen Wellenlängenbereichs mit hoher Frequenz und Intensität die jeweilige Probe sequentiell mit elektromagnetischer Strahlung lediglich einer einzelnen Wellenlänge bestrahlt und durch einen (monochrom, im gewünschten Spektralbereich arbeitenden) Detektor kann die Intensität der jeweiligen von der Probe reflektierten oder gestreuten elektromagnetischen Strahlung erfasst werden. Durch eine Steuerung erfolgt eine Anpassung von Modulationsfrequenz mit der die einzelnen Wellenlängen sequentiell in Richtung Probe emittiert werden und der Detektionsfrequenz des mindestens einen Detektors, so dass die einzelnen mit dem Detektor erfassten Intensitäten der jeweiligen Wellenlänge von emittierter elektromagnetischer Strahlung zugeordnet werden kann.

Im Idealfall können für die Modulation der Emission und Detektion der Bilddaten mehrere hundert Hertz erreicht werden, so dass vom menschlichen Auge die emittierte Strahlung als weißes Licht erkannt werden kann.

Weiterhin ermöglicht die Steuereinheit ein Zeitmultiplex der einzelnen spektralen Emissionskanäle und die Realisierung einer spezifischen spektralen Charakteristik.

Die die jeweilige elektromagnetische Strahlung emittierenden Strahlungsquellen können mit Lichtleitfasern gekoppelt werden und können mit Abstandsplatinen so justiert werden, dass eine hohe Lebensdauer und Leistungsübertragung der elektromagnetischen Strahlungen ermöglicht wird. Damit, sowie mit einer thermischen Überwachung und einem Wärmemanagement der elektronischen Auswerte- und Steuereinheit kann ein Verbrennen von Lichtleitfasern unterdrückt werden. Die Lichtleitfasern ermöglichen die spektrale Beleuchtung der zu untersuchenden Probe, z. B. über ein die elektromagnetische Strahlung homogenisierendes Element, insbesondere einen Beleuchtungsdom, Ulbrichtkugel oder einen sich in Richtung Probe erweiternden Trichter oder anderweitig homogene, diffuse Sphären.

Mit einer direkten Integration der Strahlungsquellen, die bevorzugt LEDs sein können, kann wahlweise ein lineares Modul oder vorteilhaft ein Array ausgelegt sein. Die Strahlungsquellen können daher in einer Reihen- oder einer Reihen- und Spaltenanordnung angeordnet sein. Die jeweilige von ihnen emittierte monochrome elektromagnetische Strahlung kann in ein elektromagnetische Strahlung homogenisierendes Element (diffuse Sphäre, Beleuchtungsdom, Ulbrichtkugel), gerichtet werden, die mit einer thermischen Überwachung und einem Wärmemanagement Einfluss auf Lichtleitfasern genommen werden. Auf entsprechende Ein- und Auskoppelkomponenten kann aber verzichtet werden.

Wird die Vorrichtung um eine Translations- oder Rotationseinheit erweitert, kann eine definierte Relativbewegung zwischen Detektor und Probe realisiert werden.

Die spektrale Zerlegung der unterschiedlichen zu detektierenden Wellenlängen kann von der Zeit-Domäne in die Orts-Domäne transferiert werden. Die durch das zeitliche Multiplexing erreichte spektrale Zerlegung der einzelnen sequentiell emittierten monochromatischen elektromagnetischen Strahlungen kann auf die Probe lateral aufgelöst projiziert werden. Unter Verwendung der Translations-/Rotationsgeschwindigkeit einer Bewegungseinheit, der Framerate einer Kamera als Detektor und der bekannten Frequenz mit der die einzelnen Wellenlängen nacheinander in Richtung Probe emittiert werden, kann für einzelne Positionen an einer Probe ein Spektrum rekonstruiert werden.

In einer elektronischen Auswerteeinheit können die Intensitätsmesswerte des Detektors erfasst und als spektrale Videodaten so aufbereitet werden, dass ein Modulationsdurchgang der Strahlungsquellen über alle Kanäle für einzelne emittierte Wellenlängen einem (multi- oder hyper-)spektralen Bild entspricht bzw. - bei Verwendung einer Relativbewegung von Probe und Detektor - einer (multi- oder hyper-) spektralen Bildzeile.

Zur Verringerung der zu Berücksichtigenden Datenmenge, der erfassten Intensitätsmesswerte kann eine Hauptkomponentenanalyse oder ein anderes unsupervised-learning-Verfahren die/das spektral zugeordneten Intensitätsmesswerte so komprimieren kann, dass nur die spektralen Intensitätsmesswerte gespeichert werden, die einen Hauptteil der Varianz erklären. Ebenso können die spektral zugeordneten Intensitätsmesswerte oder einzelne spektrale Kanäle mittels herkömmlicher Videokompressionsverfahren verringert werden. Die Verarbeitung der Rohdaten kann auch in FPGAs erfolgen.

Die spektral erfassten Intensitätsmesswerte oder einzelne spektrale Kanäle können mittels herkömmlicher Videokompressionsverfahren verringert werden, wie z. B. MPEG, HV1, VP9/10, HP.264 und .H.265.

Die bautechnische Entkopplung der spektralen Zerlegung von der Detektion der elektromagnetischen Strahlung ermöglicht eine kompakte skalierbare Vorrichtung zur großflächigen und gleichzeitig lateral hochauflösender hyperspektralen Bildgebung. Dabei können Monochromkameras mit entsprechenden Objektiven als Linie oder Array dergestalt als Detektor angeordnet werden, dass diese den zu untersuchenden Probenbereich vollständig erfassen können. Die Anordnung des/der Detektors/Detektoren und die darauf abgestimmte Messwertverarbeitung ermöglicht die simultane Aufzeichnung der Gesamtbreite der jeweiligen Probe in der durch die ausgewählten Detektoren (Detektorauflösung, Brennweite Objektiv) bestimmten lateralen Auflösung und mit dem entsprechenden Abstand Probe - Detektor. Die Funktionalität einer hyperspektralen Bildgebung kann durch die oben beschriebene Vorgehensweise realisiert werden.

Mit der Erfindung ist ein Einsatz von Standard-machine-vision Kameras, Kamera-Auswahl nach Standard-Machine-Vision Kriterien (Auflösung), prinzipiell kann jede Kamera eine HSI-Funktionalität als bei der Erfindung einsetzbarer erlangen. Es sind hochaufgelöste flächige und schnelle HSI-Aufnahmen auch bei Relativbewegungen von Proben und Detektor(en) möglich. Im Vergleich zu anderen Snapshot-Verfahren können Winkel-unabhängige Messungen durchgeführt werden. Es ist eine Kostenreduktion möglich, da u.a. keine teure Spektrometer-/lnterferometer/Filter-Technologie erforderlich ist, die in die Kamera hochpräzise integriert, justiert, kalibriert werde muss. Mit der Erfindung kann auch ein miniaturisierbares Konzept zur Verfügung gestellt werden. Es sind einfache HSI-Upgrades bestehender Kameras/Visionlösungen nutzbar.

Es können qualitativ hochwertigere HSI-Rohdaten zu Verfügung gestellt werden, da für jede emittierte Wellenlänge dezidiert die Fokusebene einstellbar ist. Es können anwendungsspezifisch spektral präzis ausgewählte Intensitäten vorgegeben werden. Durch einen hohen Lichtdurchsatz (somit hohes S/N) ist kein intensitätsschwächendes Element zur spektralen Dispersion erforderlich. Es kann ein an die jeweilige Inspektionsaufgabe anpassbare spektrale Charakteristik gewählt werden, was durch die Auswahl der emittierenden Strahlungsquellen, insbesondere LEDs, was deren Anzahl und emittierten Wellenlängen betrifft. Es kann eine Steuerung der Intensitätsverteilung der zu erfassenden Messwerte erfolgen. Durch eine ggf. durchführbare Modulation bzw. schnelle Änderung der Charakteristik (wenn z. B. bekannt ist, dass mehrere unterschiedliche Untersuchungsobjekte regelmäßig sich abwechseln) kann eine intrinsische Kombination aus maschineller Bildgebung und bildgebender Spektroskopie, eine komplexe Qualitätsbeurteilungen und Ermittlung komplexer Qualitätsmerkmale, insbesondere, wenn Form/Lage/Gleichmäßigkeit in der Fläche mit einbezogen werden müssen, ein geringer Platzbedarf bei Prozesseinbindungen, eine Oberfläche berührungslos und kontaminationsfrei untersucht werden. Es ist eine schnelle, vollständige und automatisierbare Qualitätskontrolle und inline-Überwachungen direkt an oder in der Produktion möglich sowie eine breitenskalierbare Vorrichtung durch Reihen- bzw. Arrayanordnung von schaltbaren LEDs sowie Kameras als Detektoren einsetzbar.

Nachfolgend soll die Erfindung beispielhaft näher erläutert werden.
Dabei zeigt:

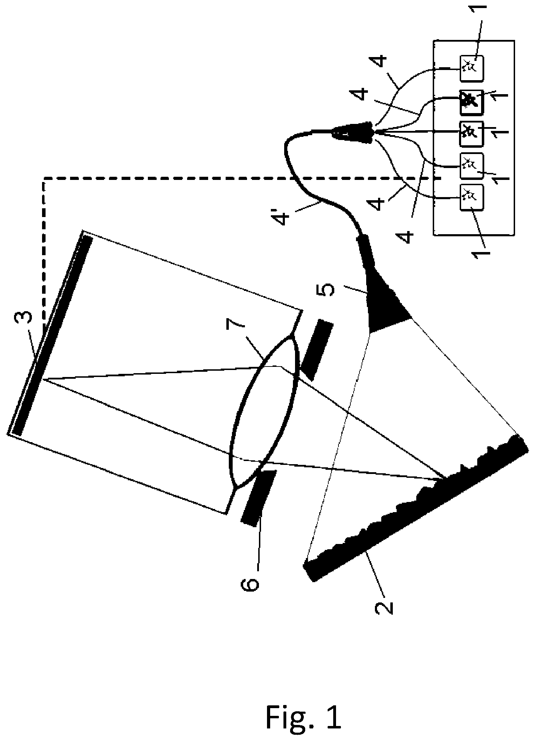

Figur 1 in schematischer Form einen Messaufbau, wie er bei der Durchführung des erfindungsgemäßen Verfahrens eingesetzt werden kann.

Bei diesem Beispiel sind fünf monochromatische elektromagnetische Strahlung emittierende Strahlungsquellen 1 in Form von Hochleistungs-LEDs vorhanden, die von einer nicht dargestellten elektronischen Auswerte- und Steuereinheit sequentiell aktiviert werden, so dass in einem Zeitintervall lediglich monochromatische elektromagnetische Strahlung einer Wellenlänge λᵢ emittiert und über eine Lichtleitfaser 4, die in eine einzelne Lichtleitfaser 4' mündet durch ein die elektromagnetische Strahlung homogenisierendes Element 5 in Richtung auf eine Probe 2 richtet.

## Patentansprüche

1. Verfahren zur optischen Überwachung und/oder Bestimmung von Eigenschaften an Proben, bei dem
von mehreren Strahlungsquellen (1) monochromatische elektromagnetische Strahlung mit vorgegebener Wellenlänge λᵢ sequentiell von einer elektronischen Auswerteinheit beeinflusst auf eine Probe (2) gerichtet wird und
die jeweilige für die Wellenlänge λᵢ spezifische Intensität der von der Probe gestreuten und/oder reflektierten elektromagnetischen Strahlung mit mindestens einem Detektor (3) erfasst und für eine spektralaufgelöste Auswertung der elektronischen Auswerteeinheit zugeführt wird, um damit eine Überwachung und/oder Bestimmung von Eigenschaften derjeweiligen Probe (2) durchzuführen.

2. Verfahren nach Anspruch 1, **dadurch gekennzeichnet, dass** elektromagnetische Strahlung mit Wellenlängen λᵢ in einem Wellenlängenbereich 250 nm bis 2500 nm eingesetzt werden.

3. Verfahren nach Anspruch 1, **dadurch gekennzeichnet, dass** elektromagnetische Strahlung mit Wellenlängen λᵢ in einem Wellenlängenbereich 1000 nm bis 2500 nm eingesetzt werden.

4. Verfahren nach einem der vorhergehenden Ansprüche, **dadurch gekennzeichnet, dass** die elektromagnetische Strahlung, die von den Strahlungsquellen (1) emittiert wird, über Lichtleitfasern (4) in Richtung Probe (2) geleitet wird.

5. Verfahren nach einem der vorhergehenden Ansprüche, **dadurch gekennzeichnet, dass** die elektromagnetische Strahlung, die von den Strahlungsquellen (1) emittiert wird, durch ein die elektromagnetische Strahlung homogenisierendes Element (5) in Richtung Probe (2) gerichtet wird.

6. Verfahren nach einem der vorhergehenden Ansprüche, **dadurch gekennzeichnet, dass** die Strahlungsquellen (1) und/oder ein die elektromagnetische Strahlung homogenisierendes Element (5) eingesetzt wird/werden, die mit einer thermischen Überwachung und einer Vorrichtung die für ein Wärmemanagement ausgebildet ist, ausgestattet sind.

7. Verfahren nach einem der vorhergehenden Ansprüche, **dadurch gekennzeichnet, dass** elektromagnetische Strahlung von mehreren Strahlungsquellen (1) emittiert und mehreren Detektoren (3) detektiert wird, wobei die Strahlungsquellen (1) und/oder Detektoren (3) in einer Reihen- oder Reihen- und Spaltenanordnung angeordnet sind.

8. Verfahren nach einem der vorhergehenden Ansprüche, **dadurch gekennzeichnet, dass** von den Strahlungsquellen (1) monochromatische elektromagnetische Strahlung mit einer Halbwertsbreite von ≤ 50 nm emittiert wird.

9. Verfahren nach einem der vorhergehenden Ansprüche, **dadurch gekennzeichnet, dass** die Probe (2) und der/die Detektor(en) (3) relativ zueinander während der Emission und Detektion zueinander bewegt werden.

10. Verfahren nach einem der vorhergehenden Ansprüche, **dadurch gekennzeichnet, dass** zur Verringerung der Datenmenge eine Hauptkomponentenanalyse oder ein anderes unsupervised-learning-Verfahren) die spektralen erfassten Intensitätsmesswerte so komprimiert, dass nur die spektralen Intensitätsmesswerte gespeichert werden, die einem Hauptteil der Varianz entsprechen.

11. Verfahren nach einem der vorhergehenden Ansprüche, **dadurch gekennzeichnet, dass** die spektral erfassten Intensitätsmesswerte oder einzelne spektrale Kanäle mittels Videokompressionsverfahren verringert werden.

12. Verfahren nach einem der vorhergehenden Ansprüche, **dadurch gekennzeichnet, dass** die Verarbeitung der Rohdaten in FPGAs erfolgen kann.
